# EUROPÄISCHE PATENTANMELDUNG

(11) **EP 0 575 826 A2**
(43) Veröffentlichungstag der Anmeldung: **29.12.1993**
(21) Anmeldenummer: 93109283.7
(22) Anmeldetag: 09.06.1993
(51) Int. Cl.: C08G 18/66, C08G 18/80, C08G 18/79

(54) **Reaktive Polyurethane und ihre Verwendung**

(30) Priorität: 22.06.1992 DE 4220419
(71) Anmelder: BAYER AG, 51368 Leverkusen (DE)
(72) Erfinder: Werner, Joachim, Dr., D-4047 Dormagen (DE); Liman, Ulrich, Dr., D-4019 Monheim (DE); Meckel, Walter, Dr., D-4040 Neuss (DE); Zenner, Armin, Dr., D-4047 Dormagen 1 (DE); Pätzold, Wolfgang, Dipl.-Ing., D-5000 Köln 80 (DE)

(57) **Zusammenfassung**

Die vorliegende Erfindung betrifft NCO-freie, durch blockierte Isocyanate reaktive, im wesentlichen lineare, weitgehend vorverlängerte Polyurethane mit Erweichungstemperaturen von oberhalb 80⁰C, ihre Herstellung sowie ihre Verwendung als thermoplastisch verarbeitbare und dabei nachvernetzende Pulver.

## Beschreibung

Die vorliegende Erfindung betrifft NCO-freie, durch blockierte Isocyanate reaktive, im wesentlichen lineare, weitgehend vorverlängerte Polyurethane mit Erweichungstemperaturen von oberhalb 80⁰C, ihre Herstellung sowie ihre Verwendung als thermoplastisch verarbeitbare und dabei nachvernetzende Pulver.

Auf vielen Gebieten der Kunststoffherstellung und -verarbeitung spielen Pulver eine wichtige Rolle. Aufgrund ihres hohen Zerteilungsgrades und des damit verbundenen Fließvermögens finden sie z.B. Verwendung zur Herstellung von Klebstoffen, Beschichtungen oder dünnen Filmen und Folien.

Bekannt ist z.B. die Verwendung dekorativer Kunststoff-Folien im Kraftfahrzeug-Innenraum (R. Pfriender, Kunststoffe 76 (1986), 10, S. 960 ff.). Dabei werden gemäß dem Stand der Technik üblicherweise nach dem Thermoform-Verfahren verformte PVC/ABS-Folien verwendet, die anschließend hinterschäumt werden. Aus Flüssig-Systemen hergestellte Polyurethan-Folien können nach dem IMC-Verfahren (In-Mould-Coating) verarbeitet werden. Die Herstellung der Bauteile ist aber sehr aufwendig und wird noch kaum beherrscht (Dr. H. Wachsmann, Kunststoffberater, 10/1987, S. 27-28).

Die Herstellung wesentlich feiner strukturierter und hinterschnittener, also qualitativ höherwertiger Folien erlaubt demgegenüber das "powder-slush-moulding"-Verfahren. Dabei wird nach dem Stand der Technik PVC-Pulver verwendet, welches durch Schwenken im erhitzten Formwerkzeug bei etwa 200⁰C geliert wird. Nach dem Abkühlen der Form kann die Folie entnommen werden.

Nachteilig an den üblicherweise mit PU-Schaumstoffen (im folgenden wird "PU" als Abkürzung für "Polyurethan" verwendet) hinterschäumten PVC-Folien ist jedoch die gegenseitige negative Beeinflussung der PVC-Folien und der Hinterschäumung. Katalysatoren oder Stabilisatoren können aus dem PU-Schaum in die PVC-Deckschicht diffundieren, gleichzeitig findet eine Migration von z.B. Weichmachern in umgekehrter Richtung statt.

Unter dem Gesichtspunkt der Wiederaufarbeitbarkeit sind ferner Verbundsysteme aus einer einheitlichen Kunststofftype erwünscht

Somit besteht von seiten der Automobilindustrie starkes Interesse an einheitlichen Materialien, bei denen die obengenannten negativen Wechselwirkungen zwischen Deckschicht und Hinterschäumung nicht auftreten und die Möglichkeit eines einfacheren Recycling besteht. Naheliegend ist daher die Verwendung von PU-Deckfolien, die mit PU hinterschäumt werdend.

Bekannt ist die Möglichkeit, thermoplastische Polyurethane (TPU), die durch Extrusions- oder Bandverfahren aus der Schmelze erhalten werden, nachträglich zu granulieren und zu mahlen und schließlich PU-Pulver zu erhalten (DE-A 39 16 874), die durch Sintern zu Folien verarbeitet werden können.

Die Verwendung von thermoplastischen PU-Systemen erlaubt das Sintern der Pulver unter Verlaufen der Schmelze zu einer homogenen Deckschicht, Bei rein thermoplastischen (linearen) Systemen tritt aber das Phänomen auf, daß die niedrigviskose TPU-Schmelze beim Sintern zu senkrechten Formwerkzeugoberflächen oder an überhitzten Formwerkzeugstellen ab- oder wegfließt und es somit zu ungleichmäßiger Dicke der Schicht oder sagar zu Löchern in der Folie kommt. Die thermoplastische Verarbeitung setzt aber ein zunächst weitgehend lineares System voraus, Eine während des Verarbeitungsprozesses eintretende Vernetzung wäre hingegen vorteilhaft wegen des eintretenden Viskositätsaufbaus (unter "Vernetzung" wird im folgenden eine echte "Quervernetzung" im Sinne der Bildung von verzweigten Strukturen bezeichnet),

Bekannt ist die Möglichkeit, Isocyanate mit monofunktionellen Reaktionspartnern ("Verkappungsmittel") wie z.B. Oximen, Caprolactam oder Phenolderivaten zu thermolabilen Addukten umzusetzen und mittels dieser "verkappten Isocyanate" Systeme zu erhalten, die bis zur Spalttemperatur der Addukte thermoplastisch sind und oberhalb dieser Temperatur vernetzen.

Weiterhin ist die Verwendung von Uretdionen oder uretdiongruppenhaltigen Polyisocyanaten in einkomponentigen PU-Reaktivsystemen an sich bekannt. Die Uretdiongruppen enthaltenden Polyisocyanate werden durch Zusammenlagerung ("Dimerisierung") zweier Isocyanatgruppen in Gegenwart spezieller Katalysatoren erhalten. Die Uretdiongruppen spalten bei höherer Temperatur unter Rückbildung zweier Isocyanatgruppen, die z.B. in Gegenwart von OH-Gruppen unter Vernetzung weiterreagieren, auf Dies geschieht ohne Freisetzung eines "Verkappungsmittels".

Bei der Herstellung thermoplastischer PU-Systeme nach dem herkömmlichen Extrusions- oder Bandverfahren in der Schmelze, wie z.B. in der genannten DE-A 39 16 874 beschrieben, müssen hinreichend hohe Temperaturen angewendet werden, um die Viskosität der Schmelze niedrig zu halten. Dies kann bei der Herstellung der oben erwahnten verkappte Isocynate enthaltenden 1K-PU-Systeme problematisch sein, da dabei die Spalttemperatur erreicht oder überschritten werden kann und das System schon bei der Herstellung merklich vernetzt.

Bekannt und Stand der Technik ist die Herstellung von 1K-PU-Pulverlacken. Diese werden hergestellt, indem Mischungen von hydroxyfunktionellen Polyesterharzen oder Acrylat-Copolymeren und blockierten Isocyanaten zwischen 80 und 130⁰C extrudiert und anschließend fein gemahlen werden (vgl. Becker/Braun, Kunststoff-Handbuch, Bd. 7, "Polyurethane", Carl Hanser Verlag. München, Wien, 1983; DE-A 2 707 656). Um die Lagerstabilität der Pulverlacke zu gewährleisten und ein Zusammenbacken bei Temperaturen bis zu 50⁰C zu verhindern, muß der Glasübergangsbereich der gegenüber NCO-Gruppen reaktiven Komponente, z.B. des OH-funktionellen Polyesterharzes, relativ hoch, z.B. deutlich oberhalb 0⁰C, liegen, und flexibilisierende Polyester sind wegen ihrer niedrigen Glasübergangstemperatur nur in geringen Anteilen einsetzbar.

Im Falle der Pulverlacke findet also im wesentlichen kein Molekulargewichtsaufbau oder eine Vernetzung, also keine Vorverlängerung bei der Herstellung statt. Hingegen liegt im Pulverlack die gegenüber NCO-Gruppen reaktive Komponente im wesentlichen frei neben der vollständig blockierten Isocyanatkomponente vor. Erst bei der Verarbeitung (Schmelze) setzt eine Deblockierung und Quervernetzung der NCO-Gruppen mit Molekulargewichtsaufbau und Polyurethanbildung ein

Dementsprechend sind relativ lange Verarbeitungszeiten notwendig, z.B. 10 bis 30 Min. bei 160 bis 200⁰C. Für eine Anwendung wie den genannten "slussh-moulding"-Prozeß wäre es aber vorteilhaft, wenn als Pulver ein bereits weitgehend vorverlängertes, zunächst aber thermoplastisches Pulyurethan verwendet werden könnte, welches über eine bei der Verarbeitung eintretende Vernetzung unter Viskositätsaufbau (s.o.) modifiziert würde.

Aufgabe der vorliegenden Erfindung war es also, ein reaktives, weitgehend vorverlängertes Polyurethan, welches zu einem lagerstabilen, rieselfähigen Pulver verarbeitbar ist, und welches in der genannten Weise als Pulver im "slush-moulding"-Prozeß verwendbar ist, nach einem Verfahren zu entwickeln, welches nicht die Gefahr der Vorvernetzung unter Herstellbedingungen aufweist.

Es wurde nun gefunden, daß diese Aufgabe erfindungsgemäß gelöst werden kann durch ein im wesentlichen NCO-freies, durch blockiertes Isocyanat reaktives, im wesentlichen lineares Polyurethan mit einer und einer Erweichungstemperatur von mehr als 80⁰C, gekennzeichnet dadurch, daß es ein Umsetzungsprodukt aus
I) organischen, zumindest anteilig symmetrischen Diisocyanaten,
II) im wesentlichen linearen Polyhydroxylverbindungen mit Molmassen zwischen 400 und 6000 und Glasübergangstemperaturen von unterhalb 0⁰C,
III) einer Komponente, die zumindest anteilig blockierte NCO-Gruppen aufweist,
IV) Diolen mit Molekulargewichten von 60 bis 600, bevorzugt 1,4-Butandiol, wobei das Verhältnis der Molekulargewichte der Komponenten II) und IV) mindestens 3 beträgt,
V) gegebenenfalls Hilfs- und Zuschlagstoffen wie Pigmenten, Stabilisatoren, Katalysatoren,
darstellt, wobei die Komponenten I, II, III und IV in geschmolzener oder flüssiger Form unterhalb der Deblockierungstemperatur der blockierten NCO-Gruppen umgesetzt werden und der Anteil an blockierten NCO-Gruppen, bezogen auf die Gesamtzahl der blockierten und freien NCO-Gruppen vor der Umsetzung, zwischen 1 und 20 % liegt und das Verhältnis der freien NCO-Gruppen der Komponenten I und III zu den gegenüber NCO-Gruppen reaktiven Gruppen der Komponenten II und IV höchstens 1,1, bevorzugt höchstens 1,05, besonders bevorzugt höchstens 1 beträgt.

Vorzugsweise weist die Komponente III im Mittel höchstens 2 freie NCO-Gruppen pro Molekül auf.

Die Umsetzung kann in einer Ausführungsform der Erfindung als "one-shot-Prozeß" erfolgen, ein Gemisch aus den Komponenten II und IV in Gegenwart der Komponente III in einem Schritt mit der Komponente I zur Reaktion gebracht wird. In einer weiteren Ausführungsform der Erfindung kann die Umsetzung stufenweise über eine Präpolymerphase ablaufen, wobei beispielsweise aus Komponente I und II zunächst ein NCO-Präpolymer hergestellt wird, welches in Gegenwart der Komponente III mit der Komponente IV umgesetzt wird.

Als organische Diisocyanate (Komponente I) können dabei aromatische, aliphatische oder cycloaliphatische Diisocyanate oder Gemische derselben verwendet werden. Höherfunktionelle Verbindungen können in geringen Mengen eingesetzt werden, doch muß dann gegebenenfalls durch Beimischung monofunktioneller Reaktanden die mittlere Funktionalität von etwa 2 gewährleistet sein. Dabei ist zu beachten, daß diese Diisocyanate entweder, im Falle der "one-shot"-Ausführungsform der vorliegenden Erfindung, bei den Umsetzungstemperaturen flüssig sind oder, im Falle der Präpolymer-Variante, das eingesetzte NCO-Präpolymer flüssig ist. Beispielhaft seien als aromatische Diisocyanate das Toluylendiisocyanat (2,4- und 2,6-Isomere oder Gemische derselben), das Diphenylmethandiisocyanat (4,4'- und 2,4'-Isomer oder Gemische derselben), das 1,4-Phenylendiisocyanat, das 1,5-Naphthylendiisocyanat (wegen des hohen Schmelzpunktes weniger bevorzugt), als aliphatische Diisocyanate das Hexamethylen-1,6-diisocyanat, das Xylylendiisocyanat, das 1,12-Dodecandiisocyanat, als cycloaliphatische Diisocyanate das 4,4'-Methylen-bis-(cyclohexyldiisocyanat), das 1,4-Cyclohexylendiisocyanat und das Isophorondiisocyanat genannt.

Aliphatische oder cycloaliphatische Diisocyanate wie das 1,6-Hexamethylendiisocyanat oder das 4,4'-Methylen-bis-(cyclohexyldiisocyanat) oder das Isophorondiisocyanat sind bevorzugt, wenn unter Licht nicht verfärbende Produkte erforderlich sind.

Um einen Erweichungsbereich von oberhalb 80⁰C zu erreichen, werden zumindest anteilig, bevorzugt mindestens 30 Mol-% der gesamten Isocyanatmischung, symmetrische Diisocyanate mit gleicher Reaktivität der NCO-Gruppen, wie z.B. 4,4'-Diphenylmethandiisocyanat oder z.B. die aliphatischen Vertreter Hexamethylen-1,6-diisocyanat oder 4,4'-Methylen-bis-(cyclohexyldiisocyanat) eingesetzt. Ein hoher Anteil an symmetrischen Diisocyanaten ist besonders vorteilhaft bei der erfindungsgemäßen Verwendung von bei Raumtemperatur flüssigen oder pastösen Polyhydroxylverbindungen als Komponente II.

Als Komponente II werden bei Raumtemperatur feste oder flüssige hochmolekulare Glykole mit im Mittel zwei Hydroxylgruppen, mittleren Molmassen von etwa 400 bis 6000 und Glasstufen von deutlich unter 0⁰C eingesetzt, um zu gewährleisten, daß die Glasstufe des erfindungsgemäßen reaktiven Polyurethans unterhalb Raumtemperatur bleibt. Dabei kann es sich beispielsweise um hydroxyfunktionelle Polyester, Polycarbonate, Polyestercarbonate, Polyether, Polyethercarbonate, Polyacetale, Polyacrylate, Polybutadiene, Polyesteramide oder Polythioether handeln. Auch aminofunktionelle Polyether (vgl. US-A 4 724 252, DE-A 37 13 858) können eingesetzt werden. Dabei sind solche Verbindungen bevorzugt, welche pro Molekül im Mittel zwei gegenüber NCO-Gruppen reaktive Gruppen aufweisen. Höherfunktionelle Verbindungen können eingesetzt werden, doch muß dann gegebenenfalls durch Beimischung monofunktioneller Reaktanden die mittlere Funktionalität von etwa 2 gewährleistet sein.

Geeignete Polyether sind z.B. solche, welche durch Ringöffnungspolymerisation von Propylenoxid oder Ethylenoxid in Gegenwart von einer oder mehrerer Verbindungen mit aktivem Wasserstoff oder durch Ringöffnungspolymerisation von Tetrahydrofuran erhalten werden.

Wenn gegenüber Licht beständige Produkte erforderlich sind, werden bevorzugt Polyester, Polycarbonate oder Polyestercarbonate mit Glasübergangsbereichen unterhalb 0⁰C eingesetzt. Geeignete Polyesterpolyole können z.B. durch Kondensation einer oder mehrerer Dicarbonsäuren, ihrer Anhydride oder Diester durch Umsetzung mit einem oder mehreren niedermolekularen Glykolen erhalten werden. Bevorzugt sind acyclische aliphatische Dicarbonsäuren wie z.B. Bernsteinsäure, Adipinsäure, Korksäure, bei der möglichen Verwendung aromatischer Dicarbonsäuren wie z.B. Phthalsäure, Isophthalsäure oder Terephthalsäure oder den entsprechenden teil- oder perhydrierten Typen ist darauf zu achten, daß der Glasübergangsbereich des Polyols nicht über 0⁰C ansteigt. Geeignete niedermolekulare Glykole sind z.B. Ethylenglykol, 1,2- oder 1,3-Propylenglykol, 1,4- oder 2,3-Butandiol, Neopentylglykol, 1,6-Hexandiol, 1,8-Octandiol, Cyclohexandimethanol, Diethylenglykol oder Dipropylenglykol, Polyester, die durch Polymerisation von Lactonen wie z.B. ε-Caprolacton erhalten werden, sind ebenfalls geeignet. Geeignete aliphatische hydroxyfunktionelle Polycarbonate können z.B. durch Reaktion der obengenannten niedermolekularen Glykole mit Diarylcarbonaten oder cyclischen Carbonaten wie Propylencarbonat erhalten werden.

Als Komponente IV werden Diole eingesetzt, welche Molmassen von weniger als 600 aufweisen. Geeignet sind z.B. die im Zusammenhang mit den aliphatischen Polyestern genannten niedermolekularen Glykole. Aminische Verbindungen sind grundsätzlich auch geeignet, wegen der Bildung sehr hochschmelzender Harnstoffsegmente aber weniger bevorzugt. Bevorzugt im "one-shot-Prozeß" sind Gemische der genannten hoch- und niedermolekularen Diole. Besonders bevorzugt als Komponente IV ist das Butandiol-1,4.

Durch den Anteil an niedermolekularen Glykolen, bevorzugt 1,4-Butandiol, als Komponente IV kann die Lage des Erweichungsbereiches beeinflußt werden. Im allgemeinen wird ein Mindestanteil von 2 Mol niedermolekularem Diol, bevorzugt 1,4-Butandiol, auf 1 Mol der hochmolekularen Diole, bevorzugt Polyester oder Polycarbonate, eingesetzt. Wie bereits beschrieben, wird ein hinreichend hoher Erweichungspunkt zusätzlich durch die zumindest anteilige Verwendung eines symmetrischen Diisocyanats gewährleistet.

Die erfindungsgemäß verwendete Komponente III stellt ein Umsetzungsprodukt dar, welches separat hergestellt und je nach Herstellverfahren (one-shot, Präpolymer, s.o.) in Gegenwart der anderen Komponenten zur Herstellung des erfindungsgemäßen reaktiven Polyurethan verwendet wird. Bei der erfindungsgemäß verwendeten Komponente III, die anteilig blockierte NCO-Gruppen aufweist, kann es sich um ein unter den Herstellbedingungen des erfindungsgemäßen reaktiven Polyurethans gegenüber mit NCO-Gruppen reagierenden Gruppen inertes, also nach außen NCO-freies Umsetzungsprodukt mit anteilig blockierten NCO-Gruppen handeln, oder es kann sich um ein gegenüber NCO-reaktiven Gruppen reaktives, also freie NCO-Gruppen enthaltendes Umsetzungsprodukt mit anteilig blockierten NCO-Gruppen handeln, welches im Mittel vorzugsweise höchstens zwei reaktive NCO-Gruppen aufweist, so daß es ohne Vorvernetzung in das reaktive Polyurethan eingebaut werden kann. Schließlich kann die erfindungsgemäß verwendete Komponente III, auch ein Gemisch zweier solcher Umsetzungsprodukte darstellen.

Die erfindungsgemäß verwendete Komponente III kann z.B. erhalten werden, indem man ein Polyisocyanat anteilig oder Vollständig mit einem Blockierungsmittel oder mit einem Blockierungsmittel und einer weiteren NCO-reaktiven Verbindung, z.B. einem Polyol, umsetzt. Dabei ist zu beachten, daß das erhaltene Umsetzungsprodukt mit den erfindungsgemäß verwendeten Komponenten I oder II (bei one-shot) oder einem als Vorstufe hergestellten Präpolymer homogen mischbar sein muß. Vorteilhaft sollte es flüssig oder bei den erfindungsgemäß angewendeten Temperaturen schmelzbar sein.

Geeignete Polyisocyanate zur Umsetzung mit einem Blockierungsmittel und/oder einer weiteren gegenüber NCO-Gruppen reaktiven Verbindung sind z.B. die weiter oben aufgeführten Diisocyanate. Vorteilhaft werden aber Polyisocyanate mit höherer Funktionalität verwendet, so z.B. die in der Lack- und Coatingsindustrie bekannten vernetzenden Isocyanate wie Polymere des Diphenylmethandiisocyanats, Biurete, Trimethylolpropanaddukte oder Trimere (Isocyanurate) der obengenannten Diisocyanate.

Zur Einstellung eines bestimmten Schmelzverhaltens und zur Erhöhung der Verträglichkeit mit den Komponenten I oder II oder einem Präpolymer kann zur Herstellung der erfindungsgemäß verwendeten Komponente III eine weitere gegenüber NCO-Gruppen reaktive Verbindung mit dem blockierten Polyisocyanat zur Reaktion gebracht werden, Dabei werden bevorzugt die weiter obengenannten hochmolekularen Glykole verwendet, Das Verhältnis von Glykol zu Blockierungsmittel ist, wenn ein höherfunktionelles Isocyanat verwendet wird, so zu wählen, das keine vorzeitige Vernetzung ("Verquallung") der erfindungsgemäßen Komponente III erfolgt.

Bei den verwendeten Blockierungsmitteln kann es sich z.B. um ein Oxim (bevorzugt Butanonoxim), ein Lactam (bevorzugt ε-Caprolactam), einen Acetessigester (bevorzugt Ethyl-acetylacetat) einen Malonester (bevorzugt Diethylmalonat) oder um ein substituiertes Phenol handeln, Aus der letzteren Gruppe sind p-Hydroxybenzoesäureester (z.B. p-Hydroxybenzoesäureethylester) besonders bevorzugt. Sie weisen niedrige Abspalttemperaturen (noch unterhalb 150⁰C) auf, der abgespaltene Ester besitzt eine geringe Flüchtigkeit und ist nicht geruchsbelästigend.

So kann die erfindungsgemäß verwendete Komponente III in einer bevorzugten Ausführungsform der vorliegenden Erfindung erhalten werden, indem das Trimer (Isocyanurat) des 1,6-Hexamethylendiisocyanats mit einem p-Hydroxybenzoesäureester teilweise blockiert und der Rest der NCO-Gruppen mit einem hydroxyfunktionellen Polyester, besonders bevorzugt ein Polyadipat mit einem Schmelzbereich nicht hoher als 100⁰C, umgesetzt wird.

In einer weiteren Ausführungsform der vorliegenden Erfindung können als blockierte Polyisocyanate auch 1,3-Bis-[isocyanat-organo]-2,4-dioxo-1,3-diazetidine oder 3,5-Bis-[isocyanat-organo]-2,4,6-trioxo-tetrahydro-1,3,5-oxadiazine, wie z.B. das Addukt von 2 Mol 1,6-Hexamethylendiisocyanat und 1 Mol Kohlendioxid, eingesetzt werden.

In einer weiteren bevorzugten Ausführungsform der vorliegenden Erfindung können als Bestandteil der erfindungsgemäß verwendeten Komponente III Polyisocyanataddukte verwendet werden, die bei Erhitzen wieder NCO-Funktionalität generieren, ohne daß ein "Abspalter" frei wird. Hier seien bevorzugt die weiter oben erwähnten sogenannten Isocyanatdimeren oder Uretdione genannt. Als Beispiele seien hier aufgeführt die Dimeren des Toluylendiisocyanates, des Diphenylmethan-diisocyanates, des Isophorondiisocyanates sowie des 1,6-Hexamethylen-diisocyanates sowie gemischte Dimere der genannten Isocyanate.

Diese Uretdion-Gruppen enthaltenden Isocyanate können als solche oder im Gemisch mit anderen Polyisocyanaten als erfindungsgemäß verwendete Komponente III eingesetzt werden. Sie können z.B. zur Verringerung der Funktionalitat bei im Mittel mehr als zwei freien NCO-Gruppen im Molekül, als solche oder im Gemisch mit anderen Polyisocyanaten mit gegenüber NCO-Gruppen reaktiven monofunktionellen Verbindungen, wie z.B. Alkoholen, umgesetzt und dann als erfindungsgemäße Komponente III mit noch freien NCO-Gruppen eingesetzt werden, Sie können als solche oder im Gemisch mit anderen Polyisocyanaten mit einem Gemisch aus einem hochmolekularen Glykol und, zur Einstellung der Funktionalität, einer monofunktionellen, gegenüber NCO-Gruppen reaktiven Verbindung umgesetzt werden. Sie können auch allein oder im Gemisch mit anderen Polyisocyanaten zur Herstellung der erfindungsgemäßen Komponente III unter Verwendung von Blockierungsmitteln, wie weiter oben beschrieben, verwendet werden.

Wenn unter Lichteinfluß nicht verfärbende Produkte erwünscht sind, sind die Uretdione der aliphatischen und cycloaliphatischen Diisocyanate bevorzugt. So wird in einer bevorzugten Ausführungsform der vorliegenden Erfindung das Dimere des 1,6-Hexamethylendiisocyanates, welches noch geringe Mengen an Trimerem (Isocyanurat) enthält, zur Einstellung der Funktionalität mit einem monofunktionellen Alkohol, bevorzugt n-Butanol oder n-Octanol umgesetzt, so daß im Mittel ungefähr zwei NCO-Gruppen pro Molekül übrigbleiben, Das Produkt ist bei Raumtemperatur vorteilhaft flüssig und kann als erfindungsgemäß einzusetzende Komponente III verwendet werden.

Der Zusatz der Komponente III im erfindungsgemäßen reaktiven Polyurethan soll die anfängliche Thermoplastizität nicht beeinträchtigen, bei der Verarbeitung des Materials als Schmelze aber für eine hinreichend effektive Vernetzung sorgen.

Der Anteil der Komponente III im erfindungsgemäßen reaktiven Polyurethan wird dementsprechend limitiert einerseits durch die Forderung einer hinreichend effektiven Vernetzung, die für einen Viskositätsansteig während der Verarbeitung, z.B. als Pulver, sorgt, andererseits durch die Gefahr einer Übervernetzung, die sich z.B. dadurch äußert, daß ein aus dem erfindungsgemäßen reaktiven Polyurethan hergestelltes Pulver nicht mehr gut aufschmilzt und verläuft, Bevorzugt wird die Komponente III in einer solchen Menge eingesetzt, daß der Anteil der durch Deblockierung oder Spaltung rechnerisch maximal entstehenden NCO-Gruppen zur Gesamtzahl der freien oder blockierten NCO-Gruppen bei etwa 1 bis 20 %, vorzugsweise mindestens 2 %, besonders bevorzugt 2 bis 12 %, liegt.

Die Gesamtzahl der NCO-Gruppen (blockiert und unblockiert) vor der Umsetzung der erfindungsgemäß verwendeten Komponenten sollte im erfindungsgemäßen reaktiven Polyurethan etwa gleich der Gesamtzahl der gegenüber NCO-Gruppen reaktiven Gruppen vor der Umsetzung (unter Ausschluß der gegebenenfalls durch den Abspalter gestellten gegenüber NCO-Gruppen reaktiven Gruppen) sein, Die bei der Verarbeitung des erfindungsgemäßen reaktiven Polyurethans, z.B. als Pulver, deblockierenden NCO-Gruppen reagieren idealerweise mit dem Teil der gegenüber NCO-Gruppen reaktiven Gruppen ab, der durch Zugabe der Komponenten II (z.B. Polyester) und IV (z.B. 1,4-Butandiol) nach Reaktion mit der Komponente I (z.B. Diisocyanat) übrig bleibt, Dementsprechend ist der Anteil an der Komponente II und IV in etwa so zu wählen, daß nach Reaktion mit den freien NCO-Gruppen der Komponente I und gegebenenfalls III ein Überschuß an gegenüber NCO-Gruppen reaktiven Gruppen verbleibt, der der Zahl an blockierten NCO-Gruppen der Komponente III in etwa entspricht. Durch Über- oder Unterschuß an blockierten NCO-Gruppen läßt sich das Schmelzverhalten der erfindungsgemäßen reaktiven Polyurethane und auch die Nachvernetzung beeinflussen. Bevorzugt werden die einzelnen Komponenten bei der Herstellung der erfindungsgemäßen reaktiven Polyurethane so abgestimmt, daß sie vorzugsweise in einem Bereich von 150 bis 220⁰C unter Vernetzung aufschmelzen. Es wurde gefunden, daß durch einen geringen Überschuß an gegenüber Isocyanat reaktiven Gruppen, z.B. OH-Gruppen, die Verarbeitungstemperatur der erfindungsgemäßen reaktiven Polyurethane in vorteilhafter Weise gesenkt und dabei gleichzeitig die anfängliche Schmelzviskosität so eingestellt werden kann, daß z.B. eine Pulverschmelze während der Vernetzung in der gewünschten Weise zu homogenen Deckschichten verläuft.

Bei der Herstellung der erfindungsgemäßen reaktiven Polyurethane können Katalysatoren, z.B. die in der PU-Chemie allgemein bekannten Katalysatoren, die die Reaktion von Isocyanatgruppen mit aktiven Wasserstoff enthaltenden Verbindungen beschleunigen, eingesetzt werden, Die Katalysatoren können, wenn zur Herstellung der Komponente III eine Umsetzung mit dem verwendeten Isocyanat notwendig ist, bei dieser Umsetzung eingesetzt werden, Falls die separate Herstellung der erfindungsgemäßen Komponente I, z.B. zum NCO-Präpolymer, notwendig ist, können sie auch bei dieser Herstellung eingesetzt werden. Sie können ebenfalls bei der Umsetzung der Komponenten I, II und IV in Gegenwart der Komponente III eingesetzt werden.

Geeignete Katalysatoren sind z.B. tertiäre Amine wie z.B. Triethylendiamin, Quecksilber-, Blei- und Wismutkatalysatoren. Bevorzugt sind Zinnkatalysatoren wie Zinnoctoat und Dibutylzinndilaurat oder Alkylester von Diorganozinndimercaptocarbonsäuren. Sie werden in Mengen bis zu 1 %, bezogen auf die Gesamtmasse der Reaktionsteilnehmer, eingesetzt.

Die Herstellung der erfindungsgemäßen PU-Reaktiv-Systeme kann beispielsweise im "one-shot-Verfahren" als Ausführungsform der vorliegenden Erfindung erfolgen. Dabei kann ein Gemisch aus hoch- und niedermolekularem Glykol (Komponenten II und IV = "OH-Komponente") unter Zusatz der Komponente III (in einer Ausführungsform ohne freie NCO-Gruppen) verwendet werden. Dabei ist durch die Reaktionsführung (Temperatur, Katalysatorzugabe) zu gewährleisten, daß keine vorzeitige Reaktion der verkappten bzw. blockierten NCO-Gruppen der Komponente III mit der "OH-Komponente" erfolgt. Anschließend erfolgt unter Zusatz der Komponente I, beispielsweise ein aliphatisches Diisocyanat, die Umsetzung zum erfindungsgemäßen PU-Reaktiv-System. Bevorzugt werden die Komponenten I und III (letztere mit oder ohne freie NCO-Gruppen) als Isocyanatkomponenten-Gemisch mit einem Gemisch aus hoch- und niedermolekularem Glykol (Polyolkomponente) vermengt und zur Reaktion gebracht.

In einer weiteren bevorzugten Ausführungsform der Erfindung wird aus den Komponenten I und II ein NCO-Präpolymer separat hergestellt. Die separat hergestellte Komponente III, enthaltend blockierte NCO-Gruppen, wird mit der Schmelze des separat hergestellten NCO-Präpolymers vermischt und das Gemisch mit der erforderlichen Menge der Komponente IV umgesetzt.

Alternativ kann in einer weiteren Ausführungsform der Erfindung ein OH-funktionelles Präpolymer, z.B. aus einem der oben erwähnten Makrodiole (Komponente II), gegebenenfalls Anteilen von kurzkettigen Glykolen (IV), der Komponente III und/oder Anteilen NCO-funktioneller Komponenten, z.B. Diisocyanaten (I), eingesetzt werden und mit einem weiteren Diisocyanat oder einem NCO-Prapolymer, umgesetzt werden.

Die Umsetzung der Komponenten I bis V kann z.B. in einer Rührapparatur erfolgen, indem die erfindungsgemäß verwendeten Komponenten in flüssiger oder geschmolzener Form z.B. homogenisiert und anschließend in Blöcke gegossen werden, wobei schließlich Verfestigung eintritt. Um eine möglichst intensive Vermischung zu gewährleisten, kann die Homogenisierung vorteilhaft in dem Fachmann an sich bekannten Mischaggregaten (Ein- oder Zweiwellenextruder, Kneter, Mischköpfen wie z.B. statischen Mischern oder Rotor-Stator-Mischern) erfolgen, wobei die flüssigen oder geschmolzenen Reaktanden über gegebenenfalls beheizte Rohrleitungen zudosiert werden. Je nach Art der Vermischung der Komponenten ist eine Nachreaktionszeit im Anschluß an die Vermischung notwendig. Diese ist je nach den Ausgangsstoffen (z.B. relativ langsam reagierende aliphatische Isocyanate), Katalysatormenge und der Temperatur variabel. Im allgemeinen sollte Vermischungs- und Nachreaktionstemperatur 110 bis 120⁰C nicht überschreiten, um eine frühzeitige Quervernetzung über entblockierte NCO-Gruppen zu vermeiden.

Für die Verarbeitung des Gemisches der Komponenten erweist es sich als besonders vorteilhaft, daß, wie oben beschrieben, bei der Herstellung der erfindungsgemäßen PU-Reaktiv-Systeme ein geringer Überschuß an gegenüber NCO-Gruppen reaktiven Gruppen, z.B. OH-Gruppen, eingesetzt werden kann Dies bewirkt eine Verringerung der Viskosität der Schmelze des Gemisches und erleichtert die Umsetzung bei niedrigen Temperaturen.

Wie bereits beschrieben, können die erfindungsgemäßen reaktiven Polyurethane besonders vorteilhaft in Pulverform verwendet werden, z.B. für den Powder-slush-moulding-Prozeß. Die Herstellung des Pulvers geschieht durch anschließende Mahlung, z.B. in Pralltellermühlen, gegebenenfalls in Gegenwart der üblichen Hilfs- und Zusatzstoffe (wie z.B. feinteilige Kieselsäuren), sowie Siebung des Mahlgutes. Eventuell kann es notwendig sein, das Mahlgut zusätzlich zu kühlen, um eine zu starke Erwarmung infolge der Scherbeanspruchung zu vermeiden (Kühlung z.B. mit Wasser, festem Kohlendioxid oder flüssigem Stickstoff).

Der Mahlvorgang wird bevorzugt so gesteuert, daß das aus den erfindungsgemäßen PU-Systemen hergestellte Pulver in Form von rieselfähigen Teilchen mit Durchmessern zwischen etwa 10 bis 1000 µ erhalten wird, Das erhaltene Pulver ist trotz des niedrigen Glasübergangsbereiches der gegebenenfalls verwendeten Polyester oder -carbonate wegen der weitgehenden Vorverlängerung (Anteil an Urethan- und/oder Harnstoffgruppen) und der damit bedingten hohen Erweichungstemperatur bei den üblichen Lagerbedingungen (< = 50⁰C) lagerstabil.

Zusatzstoffe (V), z.B. feinteilige Feststoffe wie etwa Talke oder Dampfphasenkieselsäuren zur Verbesserung der Fließeigenschaften des Pulvers oder der Schmelze, können entweder während irgendeiner Stufe der Herstellung des erfindungsgemäßen reaktiven Polyurethans zugegeben oder auch nachträglich dem Pulver zugemischt werden. Dies gilt auch für weitere Zusatzstoffe wie z.B. Pigmente, Antioxidantien, UV-Stabilisatoren, Fließhilfsmittel usw. In einer bevorzugten Ausführungsform der vorliegenden Erfindung werden die Zusatzstoffe (V) einer der flüssig oder als Schmelze vorliegenden Ausgangsstoffe, also den Komponenten I, II, IV und/oder III oder aus ihnen hergestellten Präpolymeren zugesetzt.

Im besonderen können während irgendeiner Stufe des Herstellprozesses der erfindungsgemäßen PU-Reaktivsysteme oder den daraus gegebenenfalls hergestellten Pulvern Treibmittel, bevorzugt bei Umgebungstemperatur (25⁰C) feste, pulverförmige Treibmittel, welche sich bei den Vermischungs- und Umsetzungstemperaturen der erfindungsgemäß verwendeten Komponenten noch deutlich unterhalb ihres Zersetzungspulvers befinden, z.B. Azodicarbonamid, zugesetzt werden. Man erhält so gegebenenfalls pulverförmige, treibmittelhaltige PU-Reaktivzubereitungen, welche zur Herstellung von geschäumten Formkörpern eingesetzt werden können, indem man sie oberhalb des PU-Schmelzpunktes auf die Zersetzungstemperatur des Treibmittels erhitzt.

Wegen der feinzerteilten Form eignet sich das aus dem erfindungsgemäßen reaktiven Polyurethan hergestellte Pulver für die verschiedensten Anstrich- oder Beschichtungsverfahren, wie z.B. das Wirbelsintern oder elektrostatische Spritzverfahren, sowie für die Anwendung als Heißschmelzkleber.

Wie mit der vorliegenden Erfindung gezeigt wird, kann das Pulver besonders vorteilhaft für Verfahren verwendet werden, bei denen auf vorgeheizten Formteilen durch Sintern des Pulvers ein geschmolzener Überzug erhalten wird, der nach Abkühlung des Werkstückes als "Haut" wieder abgezogen wird, Ein solches Verfahren ist der weiter oben beschriebene "powder-slush-moulding"-Prozeß. Es wurde gefunden, daß die erfindungsgemäßen Pulver durch Variation von Menge und Art der eingesetzten Ausgangsstoffe bereits bei vorteilhaft niedrigen Formteiltemperaturen ab etwa 160⁰C verarbeitet werden können, Die bei der Verarbeitung abreagierenden blockierten NCO-Gruppen führen zu einem Viskositätsanstieg der Schmelze des Pulvers. Dies führt vorteilhaft dazu, daß die Schmelze bei Überhitzung oder an senkrechten Formteilwänden nicht, wie bei rein thermoplastischen und nicht nachvernetzenden Pulvern, abfließt und keine Tropfnasen der Löcher gebildet werden.

Durch den Anteil an blockierten NCO-Gruppen und/oder die NCO-Kennzahl des Pulvers kann dieses Schmelzverhalten eingestellt werden, Der kontrollierte Einbau der blockierten NCO-Gruppen ist mittels der vorher hergestellten, einfach zudosierbaren Komponente III vorteilhaft einfach zu bewerkstelligen.

### Beispiele

### 1. Reaktives Polyurethan, hergestellt über NCO-Präpolymre

In einem Planschliff-Glasgefäß werden 2098,7 Teile eines hydroxyfunktionellen Polyesters auf Basis Adipinsäure, Hexandiol und Neopentylglykol (OH-Zahl 56) aufgeschmolzen, mit
9,3 Teilen Mercaptobenzimidazol als Oxidationsschutzmittel (Vulkanox®, Bayer AG)
6,2 Teilen Hydrolyseschutzmittel auf Basis Carbodiimid (Stabaxol I®, Bayer AG)
9,3 Teilen UV-Schutzmittel auf Basis Benzotriazol (Tinuvin® 328, Ciba Geigy AG)
0,6 Teilen Katalysator (Dibutylzinndilaurat)
versetzt und bei ca. 10 Torr/100⁰C eine Stunde entwässert.

Separat werden 171,3 Teile eines durch Dimerisierung von Hexamethylendiisocyanat (HDI) (erhältlich als Desmodur® 3400 von Bayer AG, Leverkusen) hergestellten flüssigen Uretdiongruppen-haltigen Polyisocyanat (% NCO = 21,4) bei 90⁰C mit 1-Octanol für 2 Std. umgesetzt ("Komponente III" im Sinne der Anmeldung, "Vernetzerkomponente"). Das Produkt ist unter gelindem Erwärmen bequem flüssig handhabbar.

Das Umsetzungsprodukt des HDI-Dimeren mit Octanol wird zusammen mit 586,5 Teilen HDI unter Stickstoff dem Polyester bei 90⁰C zugesetzt und das Gemisch ca. 1 Std. bis zur NCO-Konstanz gerührt (theor. 8 % NCO, gef. 7,8 %).

600 Teile des entstandenen NCO-Präpolymeren werden in eine Blechdose eingewogen und unter Rühren bei 60⁰C mit 52,2 Teilen 1,4-Butandiol versetzt. Unter Temperaturanstieg (max, etwa 110⁰C) tritt Viskositätsanstieg auf, Das Produkt wird zu 4 mm starken Platten vergossen und schließlich bei 100⁰C 16 Std. nachgetempert.

Die erhaltenen Platten wurden granuliert und von dem Material das Fließverhalten als Funktion der Vorwärmzeit bestimmt. Dazu wurde ein Hochdruckkapillarviskosimeter HKV 2000 der Fa. Göttfert-Feinwerk-Technik bei einem Druck von 2450 hPa und mit einer Kapillare von 15 mm Länge und 1 mm Durchmesser verwendet. Die Abnahme des g/10 min-Wertes als Funktion der Zeit bei 160⁰C zeigt den Viskositätsanstieg durch Nachvernetzung des Reaktivsystems (Tab. 1) Abb. 1 zeigt zum Vergleich ein thermoplastisches System gleicher Grundrezeptur, aber ohne Reaktivkomponente.

**Tabelle 1**

| g/10 min-Werte als Funktion der Zeit | | | | |
|---|---|---|---|---|
| Zeit [min] → | 5 | 10 | 15 | 20 |
| Beispiel 1 (160⁰C) | 356 | 280 | 210 | 173 |
| Thermopl. Vergleichsmuster (180⁰C) | 48,1 | 137 | 196 | 342 |

### 2. Schwarzpigmentiertes reaktives Polyurethan, hergestellt über OH-Präpolymer und Isocyanat

41,943 Teile des Polyesters aus Beispiel 1 wreden mit 3,410 Teilen eines mit 10 % Farbruß (Printex V, Degussa) gefüllten Polyesters gleichen Typs (OH-Zahl 50,5) vermischt und wie in Beispiel 1 entwässert, Man setzt 5,384 Teile 1,4-Butandiol, sowie
0,341 Teile Oxidationsschutzmittel (Vulkanox® MB, Bayer AG)
0,205 Teile UV-Schutzmittel (Tinuvon®328, Ciba-Geigy-AG)
zu und setzt unter Rühren bei 90⁰C mit
3 Teilen HDI und
4,27 Teilen des in Beispiel 1 verwendeten Umsetzungsproduktes aus HDI-Dimeren und 1-Octanol
um.

Man erhält ein OH-funktionelles Präpolymeres (OH-Zahl = 110) mit einer Viskosität bei 75⁰C von ca. 1850 mPa.s (Rotationsviskosimeter).

Für die Umsetzung des OH-Präpolymeren mit HDI werden das Präpolymer (auf 80⁰C beheizt) und das Isocyanat (bei Raumtemperatur) aus Vorratskesseln in einen Mischkopf gefördert. Im Falle des Präpolymeren werden die Rohrleitungen auf 80⁰C beheizt. Das OH-Präpolymer wird mit HDI im Massenverhältnis von 6:1 im Mischkopf (Rotor-Stator-"pin"-Mixer, Volumen 170 ml, Drehzahl 1850 Upm) homogenisiert und in Auffanggefäßen in Form von Kokillen gesammelt. Die Auslauftemperatur beträgt ca. 80⁰C, im Zuge der Nachreaktion tritt ein Temperaturanstieg auf ca. 110⁰C auf,

Das Produkt wird für 16 Std. bei 100⁰C getempert. Anschließend zeigt es einen Schmelzpunkt von etwa 165⁰C, wobei die Schmelze sich zunehmend verfestigt (Nachvernetzung des Reaktivsystems).

Die Produktkokillen werden zunächst gespalten (ca. 4 cm dicke Platte) und anschließend unter Zusatz von festem CO₂ in einem handelsüblichen Schneidmesser-Granulator auf eine Korngröße von ≦300 µm gemahlen.

Von dem Pulver werden Filme hergestellt, indem das Pulver in einer ca. 2 mm dicken Schicht auf Metallplatten gerakelt wird, die eine Temperatur von ca. 160 bis 170⁰C aufweisen. Die Platten werden kurz von nicht angeliertem Pulver durch Abklopfen befreit und nochmals ca. 10 min bei 200⁰C Ofentemperatur nachgetempert.

Nach dem Abkühlen und Entformen erhält man schwarz pigmentierte, im Griff angenehm weiche Filme, die folgende physikalische Kenndaten aufweisen:

| | |
|---|---|
| Festigkeit nach DIN 53 455: | 15 MPa |
| Bruchdehnung nach DIN 53 455: | 490 % |
| Erweichungspunkt: | ca. 170⁰C |

## Patentansprüche

1. NCO-freies, durch flockiertes Isocyanat reaktives, im wesentlichen lineares Polyurethan mit einer Erweichungstemperatur von mehr als 80°C, gekennzeichnet dadurch, daß es ein Umsetzungsprodukt aus
I) organischen, zumindest anteilig symmetrischen Diisocyanaten,
II) im wesentlichen linearen Polyhydroxylverbindungen mit Molmassen zwischen 400 und 6000 und Glasübergangstemperaturen von unterhalb 0⁰C,
III) einer Komponente III, die zumindest anteilig blockierte NCO-Gruppen aufweist,
IV) Diolen mit Molekulargewichten von 60 bis 600, wobei das Verhältnis der Molmassen der Komponenten II) und IV) mindestens 3 beträgt,
V) gegebenenfalls Hilfs- und Zuschlagstoffen wie Pigmenten, Stabilisatoren, Katalysatoren,
darstellt, wobei die Komponenten I, II, III und IV in geschmolzener oder flüssiger Form unterhalb der Deblockierungstemperatur der blockierten NCO-Gruppen umgesetzt werden und der Anteil an blockierten NCO-Gruppen, bezogen auf die Gesamtzahl der blockierten und freien NCO-Gruppen vor der Umsetzung, zwischen 1 und 20 % liegt und das Verhältnis der freien NCO-Gruppen der Komponenten I und III zu den gegenüber NCO-Gruppen reaktiven Gruppen der Komponenten II und IV höchstens 1,1, bevorzugt höchstens 1,05, besonders bevorzugt höchstens 1 beträgt.

2. Polyurethan nach Anspruch 1, dadurch gekennzeichnet, daß als Komponente IV 1,4-Butandiol eingesetzt wird.

3. Polyurethan gemäß Anspruch 1 oder 2, dadurch gekennzeichnet, daß die Komponente III mit anteilig blockierten NCO-Gruppen
a) ein Umsetzungsprodukt aus dem Isocyanurat des 1,6-Hexamethylendiisocyanats, einem Hydroxybenzoesäureester sowie einem Polyol der mittleren Molmasse 400 bis 6000,
oder
b) ein Uretdiongruppen enthaltendes Polyisocyanat oder ein Umsetzungsprodukt aus einem Uretdiongruppen enthaltenden Polyisocyanat mit einer oder mehreren NCO-reaktiven Verbindungen
oder
c) ein Gemisch von a) und b)
darstellt.

4. Polyurethan gemäß Anspruch 3, dadurch gekennzeichnet, daß das Uretdiongruppen enthaltende Polyisocyanat der Komponente III durch Dimerisierung von Hexamethylendiisocyanat oder Isophorondiisocyanat erhalten wird.

5. Polyurethan gemäß einem der Ansprüche 1 bis 4, dadurch gekennzeichnet, daß es über ein Urethan-NCO-Präpolymer, welches erhalten wird durch Umsetzung von 1,6-Hexamethylendiisocyanat und/oder 4,4'-Methylen-bis-(cyclohexylisocyanat) und einem Polyesterdiol mit der mittleren Molmasse 400 bis 6000 sowie einer Glasübergangstemperatur von unterhalb 0⁰C, dargestellt wird.

6. Polyurethan gemäß Ansprüchen 1 bis 4, dadurch gekennzeichnet, daß es durch Umsetzung von 1,6-Hexamethylendiisocyanat, 4,4'-Methylen-bis-(cyclohexylisocyanat), Isophorondiisocyanat oder einem Gemisch derselben mit einem Gemisch aus einem oder mehreren hydroxyfunktionellen Polyestern mit Molmassen von 400 bis 6000 sowie Glasübergangstemperaturen von unterhalb 0⁰C und einem oder mehreren Diolen mit Molmassen von weniger als 400, bevorzugt Butandiol, in Gegenwart der Komponente III dargestellt wird.

7. Polyurethan gemäß Ansprüchen 1 bis 4, dadurch gekennzeichnet, daß es durch Umsetzung von 1,6-Hexamethylendiisocyanat, 4,4'-Methylen-bis-(cyclohexylisocyanat), Isophorondiisocyanat oder einem Gemisch derselben mit einem hydroxyfunktionellen Präpolymer aus einem oder mehreren der genannten Diisocyanate, der Komponente III sowie hydroxyfunktionellen Polyestern mit Molmassen von 400 bis 6000 sowie Glasübergangstemperaturen von unterhalb 0⁰C und einem oder mehreren Diolen mit Molmassen von weniger als 400, bevorzugt Butandiol, dargestellt wird.

8. Polyurethan gemäß einem der Ansprüche 1 bis 7, gegebenenfalls in Pulverform, dadurch gekennzeichnet, daß es zusätzlich in einer Menge von 0,1 bis 20 Gew.-% ein bei Raumtemperatur (25⁰C) festes Treibmittel enthält, dessen Zersetzungstemperatur oberhalb der Umsetzungstemperatur der Komponenten I bis IV liegt.

9. Verwendung der Polyurethane nach einem der Ansprüche 1 bis 7 als thermoplastisch verarbeitbare und dabei nachvernetzende Pulver zur Herstellung vernetzter Folien durch Sintern der Pulver oberhalb des Schmelzpunktes während des "powder-slush-moulding"-Prozesses.

10. Verwendung der treibmittelhaltigen Polyurethane gemäß Anspruch 8 als thermoplastisch verarbeitbare und dabei nachvernetzende Pulver zur Herstellung geschäumter Formteile durch Sintern der Pulver oberhalb des Schmelzpunktes und der Zersetzungstemperatur des Treibmittels.
